# EUROPEAN PATENT APPLICATION

(11) **EP 2 570 372 A1**
(43) Date of publication of application: **20.03.2013**
(21) Application number: 11181776.3
(22) Date of filing: 19.09.2011
(51) Int. Cl.: B65G 67/08, B65G 67/20

(54) **Cargo handling system**

(71) Applicant: Greif International Holding B.V., 3633 AK Vreeland (NL)
(72) Inventor: Laurent, Pascal, FR-76770 Houppeville (FR); Ferment, Patrick, FR-27370 Le Thuit Signol (FR)
(74) Representative: Raukema, Age

(57) **Abstract**

A cargo handling system comprises a plurality of load handling docks (1) arranged next to each other and for accommodation of a vehicle (2) each, a main conveyor (5) extending along the plurality of load handling docks (1), a transfer conveyor (3) having one end (9) which joins the main conveyor (5) and a free end (10), and a cargo gripping device (7) for cooperation with the transfer conveyor (3). The free end (10) of said transfer conveyor (3) is extendable into the load handling dock (1) and/or the cargo space (4) of a vehicle (2) located in the load handling dock, and is also retractable out of said dock and/or said cargo space. Similarly, the cargo gripping device (7) is displaceable between an active position within said load handling dock and/or the cargo space (4) of a vehicle located in the load handling dock for transferring cargo between the dock and/or the cargo space on the one hand, and the transfer conveyor on the other hand, and a retracted position. For enabling an efficient docking process, a platform (11) has been provided which supports the transfer conveyor (3) and the cargo gripping device (7) at least in the retracted position of said transfer conveyor (3) and cargo gripping device (7).

## Description

The invention is related to a cargo handling system, comprising a plurality of load handling docks arranged next to each other and for accommodation of a vehicle each, a main conveyor extending along the plurality of load handling docks, a transfer conveyor having one end which joins the main conveyor and a free end, and a cargo gripping device for cooperation with the transfer conveyor, the free end of said transfer conveyor being extendable into the load handling dock and/or the cargo space of a vehicle located in the load handling dock and being retractable out of said dock and/or said cargo space, and said cargo gripping device being displaceable between an active position within said load handling dock and/or the cargo space of a vehicle located in the load handling dock for transferring cargo between the dock and/or the cargo space on the one hand, and the transfer conveyor on the other hand, and a retracted position.

Such a cargo handling system is disclosed in US-A-5015145. Said prior art cargo handling system is arranged in a hall having a number of docks which each may harbor a freight vehicle. Each time a vehicle is parked in a dock, the load gripping device is moved from the hall into the cargo space of the vehicle. Also, the transfer conveyor is extended into the cargo space. In this way, packages are fed from the hall into the cargo space.

Cargo handling systems of this type are aimed at increasing the efficiency of loading or unloading procedures of freight vehicles. In this respect, the time span and labor involved in docking the vehicle and arranging the transfer conveyor and the cargo gripping device into and out of the cargo space of the vehicle are important factors. In case these procedures require a large amount of labor and/or take a considerable amount of time, the efficiency of the load transfer operation is impaired.

The object of the invention is therefore to further improve the efficiency of the cargo transfer process between a freight vehicle and a storage hall, and in particular in connection with the docking process. This object is achieved by equipping the cargo handling system with a platform which supports both the transfer conveyor and the cargo handling means, at least in the retracted position of said transfer conveyor and cargo handling means.

According to the invention, as both the transfer conveyor and the cargo gripping device are held on the platform, which are important for the loading/unloading process, can be arranged in the proper way in one and the same operation. It is not necessary to operate these apart one after the other for arranging them in the desired position. In this way, the transfer conveyor and the cargo gripping device are handled as a unity, at least during the initial or the last stages of the docking process. Advantageously, this requires little labor.

The platform may be displaceable along the load handling docks, preferably along at least two load handling docks, more preferably along all load handling docks. For this purpose the platform may comprise wheels accommodated on a track which extends generally parallel to the main conveyor. The transfer conveyor preferably extends transverse with respect to said main conveyor. Moreover, the transfer conveyor at one end may directly adjoin the main conveyor.

The cargo gripping device and the transfer conveyor may be arranged with respect to each other in different ways. According to a first possibility, the cargo gripping device may be connected to the transfer conveyor, in such a way that the cargo load gripping device is displaceable with respect to the platform together with the transfer conveyor only. Thus, upon extending the transfer conveyor from the platform into the cargo space of the vehicle, the load gripping device at the front of the transfer conveyor is moved simultaneously into the cargo space. In this embodiment, the cargo gripping device may be located beyond the free end of said transfer conveyor.

The cargo gripping device may mounted to the extendable end of the transfer conveyor through a vertically adjustable mounting, so as to cope with possible differences between the levels of the platform and the cargo space bottom of the vehicle. Furthermore, for the purpose of easing angular differences, the cargo gripping device may be mounted to the extendable end of the transfer conveyor through a rotatable mounting, preferably with a horizontal rotation axis.

According to an alternative embodiment, the cargo gripping device may be located beside the transfer conveyor in such a way that said cargo gripping device is displaceable independently from the transfer conveyor. The selection of either of these two embodiments may depend on the room available within the cargo space for maneuvering the cargo gripping device, and on the size, shape and/or nature of the cargo goods involved.

For the purpose of positioning the cargo gripping device in an appropriate way, said the cargo gripping device may comprises wheel and positioning feet which are displaceable between an inactive position at a distance from a support surface and an active position in contact with said support surface. In particular in the case of handling or gripping relatively bulky loads, such as drums, it is desirable to stabilize the cargo gripping device with respect to the cargo space floor by means of such feet.

With the aim of promoting a swift and reliable transfer of the cargo gripping device onto and from the platform, the docks may comprise a ramp, in such a way that after aligning the platform with respect to the dock in question, the cargo gripping device can move on and off the platform. The cargo handling system may comprise a carriage and a robot arm provided on the carriage, said robot arm being provided with gripping means for gripping a piece of cargo.

The invention is furthermore related to a cargo handling unit for use in the cargo handling system described before. Said unit comprises a platform supporting an extendable transfer conveyor and cargo handling means, wherein the platform is provided with wheels and possibly a ramp for allowing said cargo gripping device to move on and off the platform, and wherein the transfer conveyor has a fixed position end as well as an extendable end which is displaceable between a retracted position within the contour of the platform and an active position extending beyond the contour of the platform.

The invention will now be described further with reference to an embodiment shown in the drawings.
Figure 1 shows a view in perspective of an embodiment of the cargo handling system.
Figure 2 shows a top view of the cargo handling system.
Figure 3 shows an enlarged top view.
Figure 4 shows an enlarged view in perspective.
Figure 5 shows a view in perspective of the cargo gripping device.

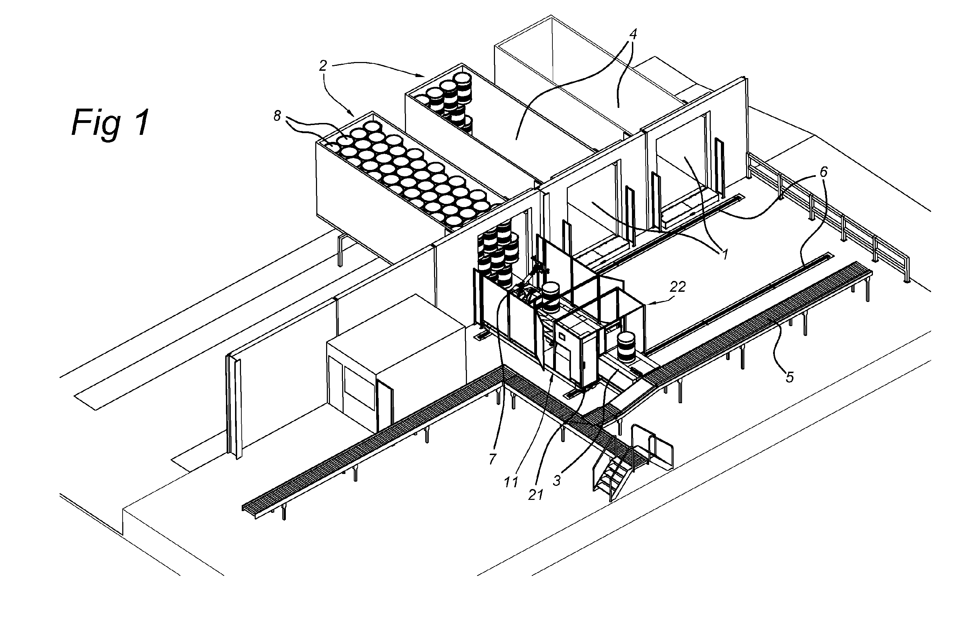

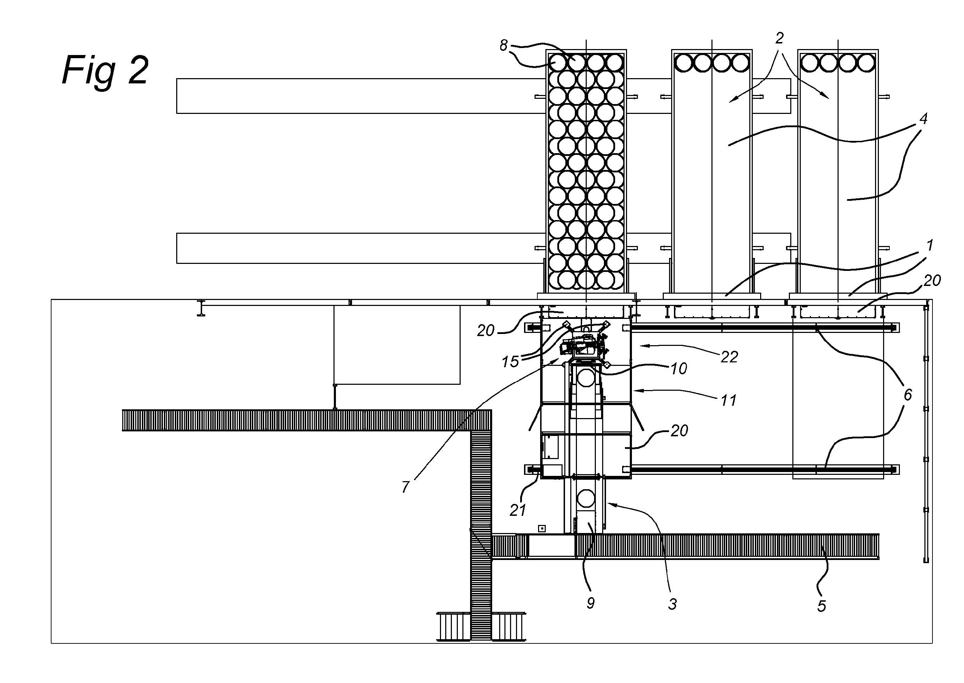

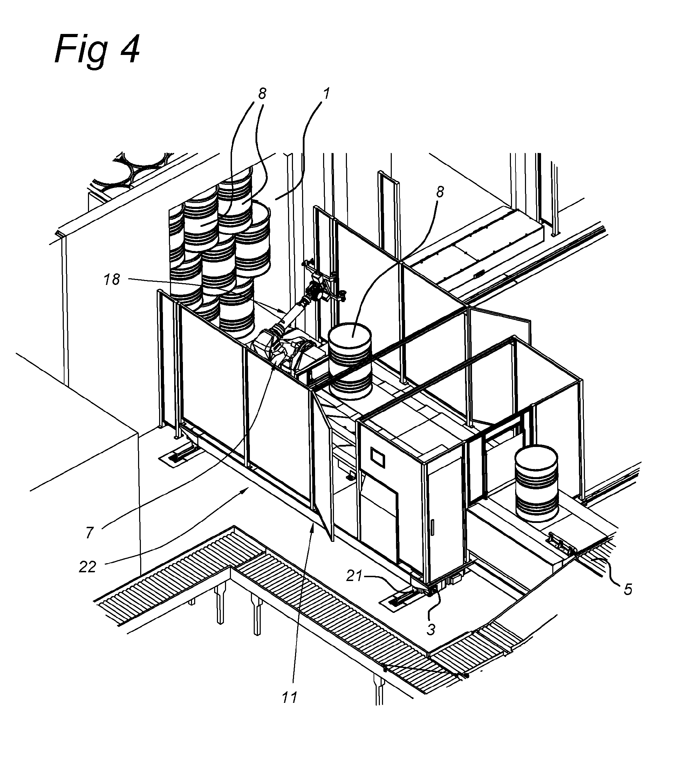

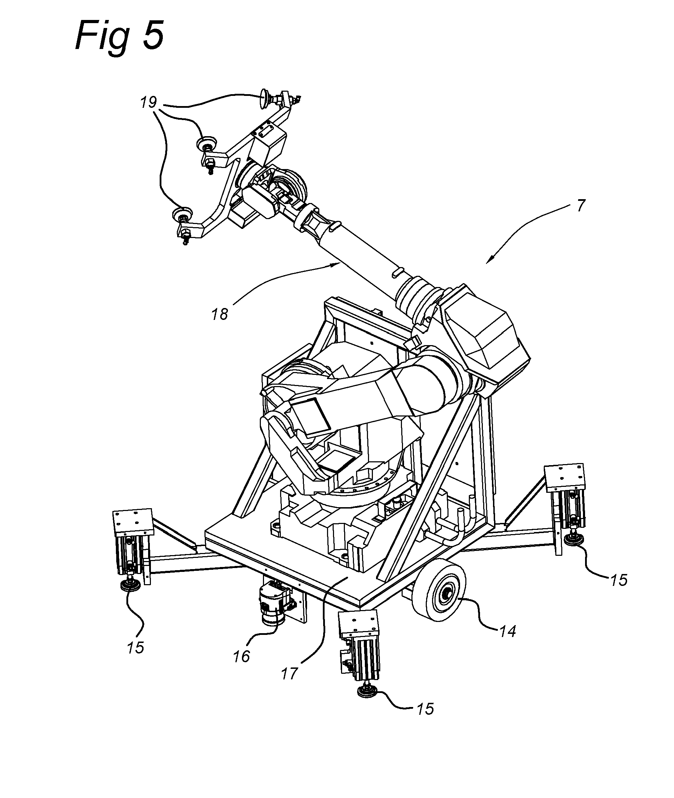

The cargo handling system shown in figures 1-5 comprises a number of docks 1 which are constituted by a wall opening of a building and an adjacent parking space for a vehicle 2. The vehicles 2 each have a cargo space 4 within which a cargo in the form of drums 8 stacked next to and upon each other is contained. For the purpose of removing the drums 8 from the vehicles 2, a conveyor system 3, 5 and a cargo gripping device 7 have been provided. The conveyor system 3, 5 comprises a main conveyor 5 which extends generally along the docks 1, and a transfer conveyor 3 which extends transverse with respect to the main conveyor 5.

The transfer conveyor is of en extendable/retractable type, which is known per se and which will not be described in further detail. The transfer conveyor 3 has a non-extendable end 9 adjacent the main conveyor 5, and an extendable, opposite free end 10. The transfer conveyor 3 is accommodated on the platform 11 which has wheels 21 which roll over the tracks 6. Thereby, the platform may be displaced along the docks 1 and the main conveyor 5 for serving any of the docks 1 at a time.

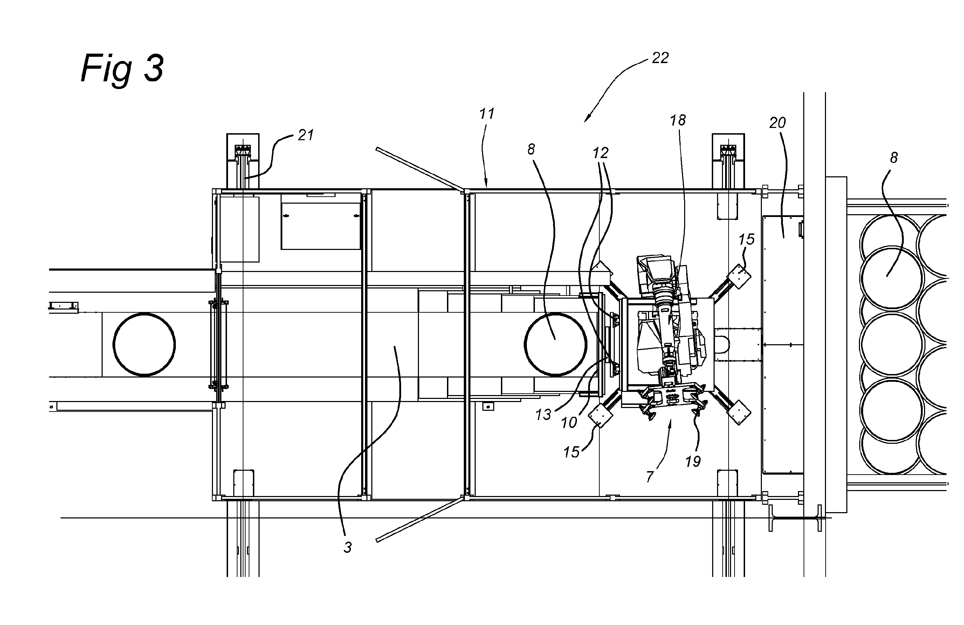

Furthermore, the cargo gripping device 7 can be accommodated on the platform 11. As shown in figure 3, the cargo gripping device 7 is connected to the free or extendable end 10 of the transfer conveyor 3 through both a vertical adjustment guide 12 and a rotational connection 13 for coping with level differences between the platform and the cargo space bottom. The platform 11, transfer conveyor 3 and the cargo gripping device 7 together form a unity which is designated as the cargo handling unit 22.

The cargo gripping device 7 has wheels 14 enabling the displacement thereof together with the extending transfer conveyor 3, as well as support feet 15. The cargo gripping device 7 can be moved from and onto the platform 11 through the ramps 20 which are available at each dock 1. Once the cargo gripping device 7 is positioned with respect to the drums 8 to be gripped, the support feet 15 are activated so as to stabilize the cargo gripping device 7 with respect to the platform of the cargo space bottom. The cargo gripping device has a carriage 17 onto which the robot 18 has been mounted. The robot 18 has suction grippers 19 for gripping a drum 8.

A sensor 16 is provided on the carriage 17 so as to provide information concerning adjacent drums and to control the robot 18.

### List of reference numerals

- 1.: Dock
- 2.: Vehicle
- 3.: Main conveyor
- 4.: Cargo space
- 5.: Transfer conveyor
- 6.: Track
- 7.: Cargo gripping device
- 8.: Drum
- 9.: Non-extendable end transfer conveyor
- 10.: Free end transfer conveyor
- 11.: Platform
- 12.: Vertical adjustment guide
- 13.: Rotational connection
- 14.: Carriage wheel
- 15.: Support foot
- 16.: Sensor
- 17.: Carriage
- 18.: Robot
- 19.: Gripper
- 20.: Ramp
- 21: Conveyor wheel
- 22.: Cargo handling unit

## Claims

1. Cargo handling system, comprising a plurality of load handling docks (1) arranged next to each other and for accommodation of a vehicle (2) each, a main conveyor (5) extending along the plurality of load handling docks (1), a transfer conveyor (3) having one end (9) which joins the main conveyor (5) and a free end (10), and a cargo gripping device (7) for cooperation with the transfer conveyor (3), the free end (10) of said transfer conveyor (3) being extendable into the load handling dock (1) and/or the cargo space (4) of a vehicle (2) located in the load handling dock and being retractable out of said dock and/or said cargo space, and said cargo gripping device (7) being displaceable between an active position within said load handling dock and/or the cargo space (4) of a vehicle located in the load handling dock for transferring cargo between the dock and/or the cargo space on the one hand, and the transfer conveyor on the other hand, and a retracted position, **characterized by** a platform (11) supporting the transfer conveyor (3) and the cargo gripping device (7) at least in the retracted position of said transfer conveyor (3) and cargo gripping device (7).

2. Cargo handling system according to claim 1, wherein the platform (11) is displaceable along the load handling docks (1), preferably along at least two load handling docks (1), more preferably along all load handling docks (1).

3. Cargo handling system according to claims 1 or 2, wherein the platform (11) comprises wheels (21) accommodated on a track (6) which extends generally parallel to the main conveyor (5).

4. Cargo handling system according to any of the preceding claims, wherein the cargo gripping device (7) is connected to the transfer conveyor (3) and is displaceable together with the transfer conveyor only.

5. Cargo handling system according to claim 4, wherein the cargo gripping device (7) is located beyond the free end (10) of said transfer conveyor (3).

6. Cargo handling system according to claim 4 or 5, wherein the cargo gripping device (7) is mounted to the extendable end (10) of the transfer conveyor (3) through a vertically adjustable mounting (12).

7. Cargo handling system according to claim 4, 5 or 6, wherein the cargo gripping device (7) is mounted to the extendable end (10) of the transfer conveyor (3) through a rotatable mounting (13), preferably with a horizontal rotation axis.

8. Cargo handling system according to any of claims 1-3, wherein the cargo gripping device (7) is located beside the transfer conveyor (3) and is displaceable independently from the transfer conveyor (3).

9. Cargo handling system according to any of claims 4-8, wherein the cargo gripping device (7) comprises wheels (14) and positioning feet (15) which are displaceable between an inactive position at a distance from a support surface and an active position in contact with said support surface.

10. Cargo handling system according to any of the preceding claims, wherein a dock (1) comprises a ramp (20), the platform (11) being aligned with respect to said ramp for allowing said cargo gripping device (7) to move on and off the platform (11).

11. Cargo handling system according to any of the preceding claims, wherein the cargo gripping device (7) comprises a carriage (17) and a robot arm (18) provided on the carriage, said robot arm being provided with gripping means (19) for gripping a piece of cargo.

12. Cargo handling system according to any of the preceding claims, wherein the transfer conveyor (3) extends transverse with respect to the main conveyor (5).

13. Cargo handling system according to any of the preceding claims, wherein the transfer conveyor (3) directly adjoins the main conveyor (5).

14. Cargo handling system according to any of the preceding claims, wherein the loading docks (1) are arranged transverse with respect to the main conveyor (5).

15. Cargo handling unit (22) for use in the cargo handling system according to any of the preceding claims, said unit comprising a platform (11) supporting an extendable transfer conveyor (3) and a cargo gripping device (7), wherein the platform (11) is provided with wheels (14) allowing said cargo gripping device (7) to move with respect the platform, and wherein the transfer conveyor (3) has a fixed position end (9) which is fixed with respect to the platform (11) as well as an extendable end (10) which is displaceable between a retracted position within the contour of the platform (11) and an active position extending beyond the contour of the platform (11).
